# FASCICULE DE BREVET EUROPEEN

(11) **EP 1 697 990 B1**
(45) Date de publication et mention de la délivrance du brevet: **07.03.2007**
(21) Numéro de dépôt: 04816594.8
(22) Date de dépôt: 22.12.2004
(51) Int. Cl.: H01L 23/48, H01S 3/00, H01L 21/58

(54) **ASSEMBLAGE D'UN COMPOSANT MONTE SUR UNE SURFACE DE REPORT**
BAUGRUPPE EINER AUF EINER TRANSFEROBERFLÄCHE ANGEBRACHTEN KOMPONENTE
ASSEMBLY OF A COMPONENT MOUNTED ON A TRANSFER SURFACE

(30) Priorité: 24.12.2003 FR 0351204
(43) Date de publication de la demande: 06.09.2006
(73) Titulaire: COMMISSARIAT A L'ENERGIE ATOMIQUE, 75015 Paris (FR)
(72) Inventeur: BALERAS, François, F-38170 Seyssinet (FR); KOPP, Christophe, F-38120 Fontanil-Cornillon (FR)
(74) Mandataire: Poulin, Gérard
(86) Numéro de dépôt international: PCT/FR2004/050747
(87) Numéro de publication internationale: WO 2005/064676

(56) Documents cités:
- WO-A-87/01509
- FR-A- 2 777 124
- US-A- 4 752 816
- US-A- 5 832 010
- US-A1- 2002 096 254
- US-A1- 2003 030 066
- US-A1- 2003 072 913

## Description

### DOMAINE TECHNIQUE ET ART ANTERIEUR

La présente invention concerne le domaine des dispositifs microélectroniques et plus particulièrement optiques. Elle concerne notamment un composant, par exemple optique, à monter sur une surface de report. Elle concerne aussi un dispositif intégrant un tel composant, notamment un dispositif optique, un procédé d'assemblage d'un tel composant et le procédé de fabrication de ce composant.

Le document US-A-2002/096254 décrit un composant destiné à être monté sur une surface de report avec des plages métallisées d'accrochage.

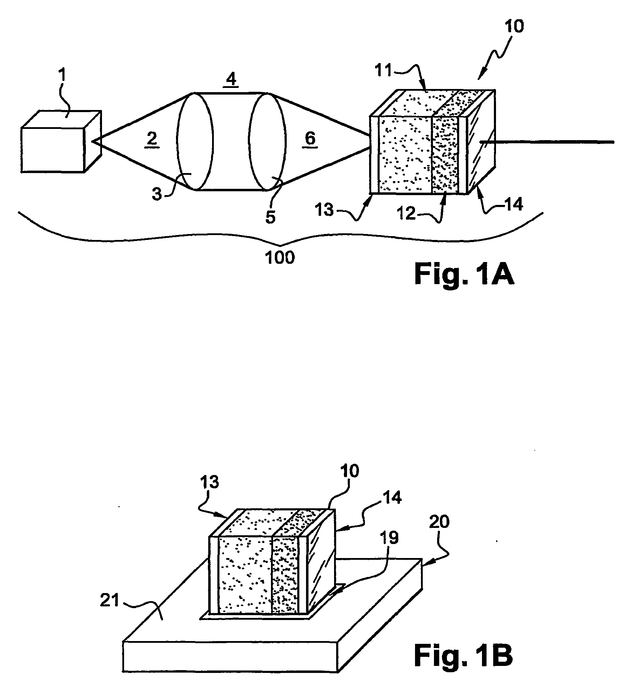

La figure 1A illustre un exemple de dispositif d'optique intégré correspondant à la conception d'un banc optique, comprenant un émetteur 1 de rayonnement laser 2, 6 dirigé sur un système 4 d'optique focale suivi d'un composant 10 de type « microlaser ». La source 1 est par exemple une diode émettrice laser (DEL) et le système focal 4, schématisé par une paire de lentilles 3 et 5, peut être constitué par un composant ou circuit intégré optique (en anglais « Integrated Optic Circuit » ou « Integrated Optic Component » , abrégé IOC).

Dans cet exemple particulier, la cellule résonnante 10 est un composant multicouches, généralement parallélépipédique, constituée d'un corps 11 en matériau laser adjoint d'une couche 12 de matériau absorbant saturable.

Dans ce type de dispositif, comme on le comprend d'après la figure 1A, on cherche à positionner, maintenir et aligner entre eux, les divers composants optiques. En particulier, la puce laser doit être montée sur une face perpendiculaire aux faces actives.

La figure 1B expose un exemple de report de puce, selon l'état de la technique : une plateforme de support 20 comporte une surface plane 21 sur laquelle est positionnée une puce 10 parallélépipédique, constituant un composant optique tel que la cellule résonnante laser de la figure 1A.

La puce 10 du composant optique est reportée en amenant une face latérale, perpendiculaire aux faces des miroirs d'extrémités 13 et 14, contre la surface 21 de la plateforme.

Les autres composants optiques du dispositif 100, tels que la puce 1 de diode laser et l'éventuel composant d'optique intégré correspondant au système focal 4, peuvent alors être reportés de la même façon contre la surface 21 de la plateforme 20.

Les divers composants 1, 4 et 10 du dispositif sont alors disposés en appui sur un même plan 21 et peuvent être déplacés sur ce plan afin d'être positionnés et alignés.

Les composants 1, 4, 10 sont ensuite fixés sur la plateforme 20 par collage. On dépose donc une goutte de colle 19 sous chaque composant à fixer avant de le reporter sur son emplacement à la surface 21 de la plateforme 20.

Les inconvénients des techniques connues de collage sont multiples :
- Les colles utilisées actuellement peuvent endommager la structure externe du composant. Les polymères peuvent notamment dégazer et contaminer les surfaces externes de laser ou polluer les surfaces réfléchissantes des miroirs de la cavité laser, ce qui réduit ou annihile l'efficacité du laser 100.
- Les colles présentent une faible conductivité thermique. Or, les composants optiques miniatures dégagent de la chaleur. En particulier, l'énergie de pompage des diodes lasers et l'énergie absorbée dans la « cavité » laser génèrent des pertes thermiques importantes qu'il faut évacuer pour éviter tout échauffement destructeur. Mais les colles thermo-conductrices ont une conductivité thermique limitée de l'ordre de quelques Watts par mètre et par Kelvin (moins de 10 W/m.K).
Cette faiblesse empêche de monter des composants optiques à forte dissipation de puissance sur une plateforme, ce qui limite la puissance des composants assemblés par cette technique.
- La surépaisseur du joint de colle est difficile à contrôler, ce qui nuit à l'obtention d'un alignement optique correct. Cet inconvénient d'épaisseur incontrôlée du collage affecte particulièrement les dispositifs optiques pour lesquels l'alignement optique est critique tels que les lasers, les interfaces de fibres optiques avec des guides d'onde, les réseaux,... .

Autre problème, la technique de collage ne permet pas de maîtriser le positionnement et l'alignement du composant reporté. Ceci empêche toute automatisation de la fabrication des dispositifs optiques intégrés.

Enfin, autre inconvénient, la fixation par collage est définitive et ne peut être remise en cause, pour rectification, sans endommager le dispositif optique.

### EXPOSE DE L'INVENTION

L'objet de l'invention est de réaliser un assemblage de composant, notamment optique, sur une surface de report permettant une fixation fiable et solide sans les inconvénients précités.

Un objectif particulier de l'invention est d'obtenir un système d'assemblage permettant de maîtriser la précision du positionnement et de l'alignement du composant, voire d'assembler automatiquement des composants sur leurs surfaces de report respectives.

Un autre objectif est de développer une technique permettant de réaliser un système d'assemblage à l'échelle du substrat de manière collective, lors de la fabrication groupée des composants.

Ces objectifs sont atteints en prévoyant une fixation par soudure d'un composant, notamment de type optique, au lieu d'un assemblage par collage, et en déposant, à cette fin, une ou des plages métallisées sur une face du composant.

Une telle métallisation d'accrochage constitue une surface mouillante pour la soudure. Les surfaces mouillables sont avantageusement implantées à la périphérie du composant (bordures d'angles ou d'arêtes de la face de report) et au creux de cavités aménagées à cet endroit.

L'invention est d'écrite dans la revendication 1 et concerne notamment un composant, par exemple optique, destiné à être monté sur une surface de report, dans lequel au moins une face du composant comporte au moins une plage métallisée d'accrochage permettant un assemblage par report du composant et soudure des plages métallisées d'accrochage sur la surface de report.

La disposition des plages métallisées sur le composant permet un montage sur une surface de report.

Un autre avantage de l'invention est de constituer un pont thermique : les alliages fusibles utilisés pour les soudures présentent en effet une conductivité thermique de l'ordre de 10 à 50 W/m.K. Ceci permet une importante évacuation de chaleur, et en particulier un refroidissement efficace des composants, par exemple lasers, ce qui autorise finalement une augmentation de puissance importante de ces composants.

Enfin, de façon avantageuse, l'assemblage par alliage fusible permet d'obtenir un alignement automatique du composant sur des emplacements métallisés correspondant à la surface de la plateforme de report, l'auto-alignement étant effectif sur les trois axes.

Le composant selon l'invention peut comporter une couche définissant un plan. Ce plan est par exemple sensiblement perpendiculaire à la surface de report.

Il peut comporter une couche active, par exemple celle ci-dessus définissant un plan, par exemple encore une couche optiquement active.

Selon l'invention, le composant peut donc être associé à une plateforme de support formant surface de report et comportant des plages métallisées d'accueil correspondant aux plages métallisées d'accrochage du composant.

Chaque plage métallisée d'accrochage peut être déposée au fond d'une encoche d'assemblage respective creusée en retrait dans la surface plane externe de la face de report, par exemple en bordure de la face de report du composant.

La face de report peut comporter au moins deux plages métallisées aménagées le long de deux bords opposés ou de bords d'arête de ladite face, ou des plages métallisées, par exemple au nombre de quatre, aménagées aux angles de ladite face.

Un élément intercalaire peut en outre être disposé sur la face de report pour venir s'interposer entre le composant et une plateforme de report, par exemple avec une fonction de radiateur/refroidisseur ou avec une fonction de cale ou de butée de réglage de positionnement optique.

L'invention s'applique particulièrement aux composants comprenant plusieurs couches de milieux distincts, par exemple de milieux optiques, disposées perpendiculaires à la face de report. Elle s'applique plus spécifiquement aux composants de type microlaser.

Un procédé d'assemblage d'un composant selon l'invention avec une plateforme, décrit dans la revendication 15, met en oeuvre une soudure avec apport de matière, par exemple un matériau fusible ou une brasure, entre chaque plage métallisée d'accrochage du composant et la surface de la plateforme.

Par soudure des plages métallisées sur la surface de report, on entend aussi bien soudure de type homogène (avec ou sans apport de matière de type de celle des plages métallisées) que de type hétérogène (avec apport de matière de type matériau fusible).

Un dépôt de métallisation peut aussi être réalisé à la surface de la plateforme.

Une telle solution de montage permet de disposer les composants à des endroits voulus sur une plateforme au gré du concepteur. Le nombre de composants reporté peut être aussi élevé que voulu, étant limité seulement par l'étendue de la plateforme choisie.

Une telle solution de montage facilite les opérations d'assemblage du composant, les plages métallisées étant accessibles aisément pour la soudure. Les opérations de soudure peuvent s'effectuer de manière automatisée avec des outils de soudure venant s'appuyer à la jonction des plages métallisées du composant et de la plateforme.

Autre avantage, le mode d'assemblage de composants selon l'invention permet un auto-positionnement du composant sur les plages d'accueil de la plateforme et offre en outre, un auto-alignement passif du composant. Ceci est particulièrement avantageux dans le domaine optique pour un composant optique.

Alternativement ou cumulativement, l'utilisateur a la possibilité de procéder à un alignement actif du composant en agissant lors de la soudure pour ajuster l'alignement du composant selon un, deux ou trois degrés de liberté.

Si le composant comporte plusieurs plages d'accrochage sur la face de report, le parallélisme entre la puce et le substrat d'accueil peut être ajusté. La version avec 4 plages métallisées est la plus intéressante pour l'assemblage passif puisque l'auto-alignement est effectif sur les deux axes.

Une ou plusieurs encoches creusées en retrait par rapport à la surface de report du composant, sont préalablement réalisées sur une ou plusieurs faces du composant, un dépôt de métallisation au fond de chaque encoche formant des plages métallisées en retrait par rapport à la surface de report du composant.

L'invention concerne également un procédé de fabrication de composants comportant des étapes consistant à :
- graver une série de fentes parallèles dans une plaquette de substrat, dans laquelle un ou des composants optiques ont été réalisés, les fentes étant creusées dans une portion de l'épaisseur du substrat, et,
- déposer une métallisation au creux des fentes préalablement gravées dans l'épaisseur de la plaquette.

La série de fentes parallèles comporte par exemple des fentes étendues longitudinalement afin de tracer des tranchées ou sillons dans la surface de la plaquette, ou encore au moins deux bandes parallèles de courtes fentes transversales afin de creuser un réseau de cavités dans cette surface.

La métallisation peut comprendre plusieurs opérations de dépôt de couches successives de métaux distincts, notamment trois opérations de dépôt successif de titane, de nickel et d'or pour obtenir une triple couche Au/Ni/Ti, et peut être obtenue par pulvérisation cathodique ou par évaporation métallique.

Une étape complémentaire de la découpe par gravure des composants peut être effectuée par attaque chimique ou par découpe mécanique dirigée dans le prolongement de l'axe des fentes, avec un trait de coupe plus étroit que l'épaisseur d'écartement desdites fentes.

### EXPOSE SOMMAIRE DES FIGURES

D'autres avantages, caractéristiques et objectifs de l'invention apparaîtront à la lecture de la description détaillée ci-après de modes de réalisation, donnés uniquement à titre d'exemples non limitatifs, en regard des dessins annexés sur lesquels :
- les figures 1A et 1B représentent la disposition et le montage des composants d'un dispositif optique sur une surface de report selon une technique connue ;
- les figures 2A et 2B représentent un premier mode de réalisation d'un composant optique selon l'invention, et son assemblage sur une plateforme ;
- les figures 3A-3F représentent des métallisations sur les deux faces supérieure et inférieure d'un composant optique, en vue de dessous 3A/3D, en vue de côté 3B/3E et en vue de dessus 3C/3F, selon le premier mode de réalisation de l'invention ;
- les figures 4A-4D représentent un composant optique avec des métallisations uniquement sur la face inférieure, selon un second mode de réalisation de l'invention ;
- les figures 5A-5D représentent un composant optique avec une seule plage métallisée sur la face inférieure, selon un troisième mode de réalisation de l'invention ;
- la figure 6 représente une vue en coupe d'un composant optique reporté et fixé sur une plateforme avec un élément intercalaire selon une alternative de l'invention ;
- la figure 7 représente les étapes 7A à 7F d'un procédé de fabrication d'un composant selon l'invention.

### EXPOSE DETAILLE DE MODES DE REALISATION DE L'INVENTION

Dans la description qui suit, on prendra à titre d'exemple le cas particulier d'un composant optique.

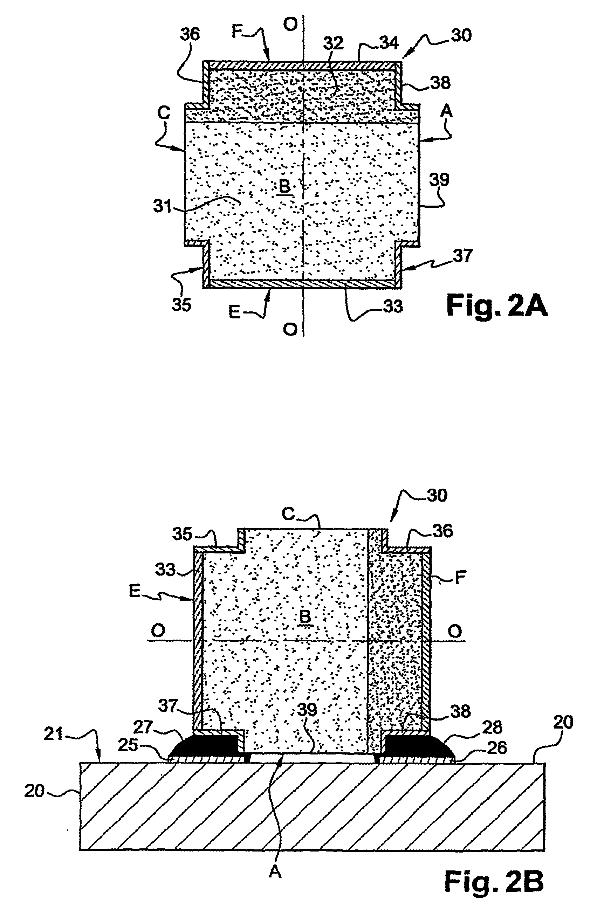

Le principe général de l'assemblage d'un composant optique, selon l'invention, apparaît sur les figures 2A et 2B qui illustrent le report du composant 30 sur une plateforme 20 de support.

La figure 2A montre un composant dont les deux faces E et F (antérieure et postérieure respectivement) comportent des couches de miroirs.

Le composant optique 30 considéré ici est, par exemple, un composant multi-couches de cellule résonnante laser. Il peut s'agir d'un composant microlaser comportant une série de couches superposées, comme par exemple décrit dans le document EP-A-653 824.

Comme schématisé en figure 2A, une première couche 31 en matériau laser forme le milieu actif du composant 30, contre laquelle est accolée une deuxième couche 32, constituée de matériau absorbant saturable. Enfin, des couches réfléchissantes 33 et 34 formant miroirs sont appliquées en revêtement des faces antérieure F et postérieure E.

L'invention prévoit que une ou plusieurs plages métallisées sont aménagées sur le composant. Dans l'exemple illustré, les plages métallisées sont disposées le long des bords d'arêtes de la puce du composant optique.

Dans le mode de réalisation de la figure 2A, deux faces opposées A et C, disposées sensiblement perpendiculaires aux couches 31, 32 du composant, comportent chacune deux plages métallisées 35, 36, 37, 38 aménagées aux deux extrémités de leur surface, respectivement.

La face A comporte ainsi une première plage de métal 37 déposée sur une portion, dite aussi portion distale, adjacente à la face antérieure E (miroir d'entrée de la cellule laser) et une seconde plage de métal 38 déposée sur une portion distale opposée adjacente à la face postérieure F (miroir de sortie laser).

Les plages métallisées sont formées ou déposées de préférence au creux de légères entailles en forme d'encoches 35, 36, 37, 38 aménagées le long des bords d'arêtes du composant optique, ici en retrait le long des quatre bordures d'arêtes parallèles C/E, C/F, A/E, A/F. De façon avantageuse, les plages métallisées recouvrent exactement la surface en creux desdites entailles ou encoches.

Lors du report, la face A de la puce du composant optique 30 peut venir prendre appui contre la surface plane 21 d'une plateforme 20. La plateforme est réalisée en un substrat, par exemple du silicium, de l'alumine etc..

Des plages métallisées 25, 26 sont déposées sur la face supérieure 21 de la plateforme 20, à l'emplacement projeté de report des plages métallisées 37, 38 du composant 30.

Selon une forme de réalisation, les plages d'accueil métallisées 25, 26 de la plateforme 20 occupent une surface sensiblement supérieure à la surface projetée correspondant à l'emplacement des plages métallisées 37, 38 d'accrochage du composant 30. Ainsi, lors du report, la surface étendue des plages d'accueil 25, 26 confère une certaine latitude pour déplacer le composant 30 et régler son positionnement et son alignement sur plusieurs axes.

Cette forme de réalisation offre donc une latitude d'alignement actif du composant (alignement par actionnement manuel ou mécanisé).

Lorsque le matériau fusible 27, 28 est chauffé au moins à sa température de fusion, il passe en phase liquide. Ensuite, on aligne et on positionne le composant 30. Lors du refroidissement de l'ensemble 20, 30,... le matériau fusible 27, 28 repasse en phase solide, permettant la fixation du composant 30.

Une seule plage métallisée d'accueil peut couvrir et englober toute la surface joignant les emplacements de toutes les plages métallisées d'accrochages 37, 38 de la face A de report d'un composant, c'est-à-dire une surface connexe sensiblement égale ou supérieure à la section hors tout du composant 30, ou à l'aire totale de la face de report A avec ses encoches 37, 38 incluses.

Alternativement, une unique plage métallisée d'accueil peut aussi couvrir une surface connexe englobant les emplacements de plusieurs composants à reporter.

Dans une forme de réalisation simple, une majeure partie ou toute la surface 21 de la plateforme 20 est métallisée, formant une unique plage d'accueil métallisée permettant de disposer librement une série de composants optiques sur la plateforme.

Selon un mode de réalisation, les plages métallisées d'accueil 25, 26 peuvent occuper une surface sensiblement égale à la surface de projection des plages métallisées d'accrochage 37, 38 du composant 30.

De façon avantageuse, cette correspondance de surface entre les plages métallisée d'accrochage 37, 38 du composant 30 et les plages 25, 26 de la plateforme 20 permet un positionnement naturel automatique du composant 30 à son emplacement exact prévu sur la plateforme 20. Un tel auto-positionnement est particulièrement avantageux en optique. L'effet d'auto-positionnement est lié aux forces de mouillabilité de la brasure en phase liquide (capillarité de la goutte de brasure et flottement du composant sur la goutte, en l'absence de cale de positionnement). L'auto-positionnement s'effectue d'une part selon les directions axiales X et Y, c'est-à-dire que le composant se positionne dans un plan parallèle à la surface de report, par effet de mouillabilité sur les plots métalliques 25 et 26. D'autre part, l'auto-positionnement dans la direction axiale Z (perpendiculaire à la surface de report) s'effectue par le contrôle du volume de brasure.

En outre, comme le suggère la figure 2B, lorsque la quantité d'alliage fusible 27, 28 est réduite, la surface plane saillante 39 de la face inférieure A du composant 30 vient s'appuyer contre la surface plane 21 de la plateforme, ce qui entraîne un alignement automatique de l'axe optique OO du composant sur l'axe optique de l'ensemble du dispositif optique.

De façon alternative, il est possible de contrôler et de moduler la quantité de matière fusible 27, 28 disposée dans chaque intervalle 25-37 et 26-38 séparant les plages métallisées correspondantes. Ceci modifie légèrement l'épaisseur de soudure, donc les hauteurs d'écartement des bords du composant, ce qui permet de rectifier l'alignement de l'axe OO du composant 30 sur l'axe optique de l'ensemble du dispositif final.

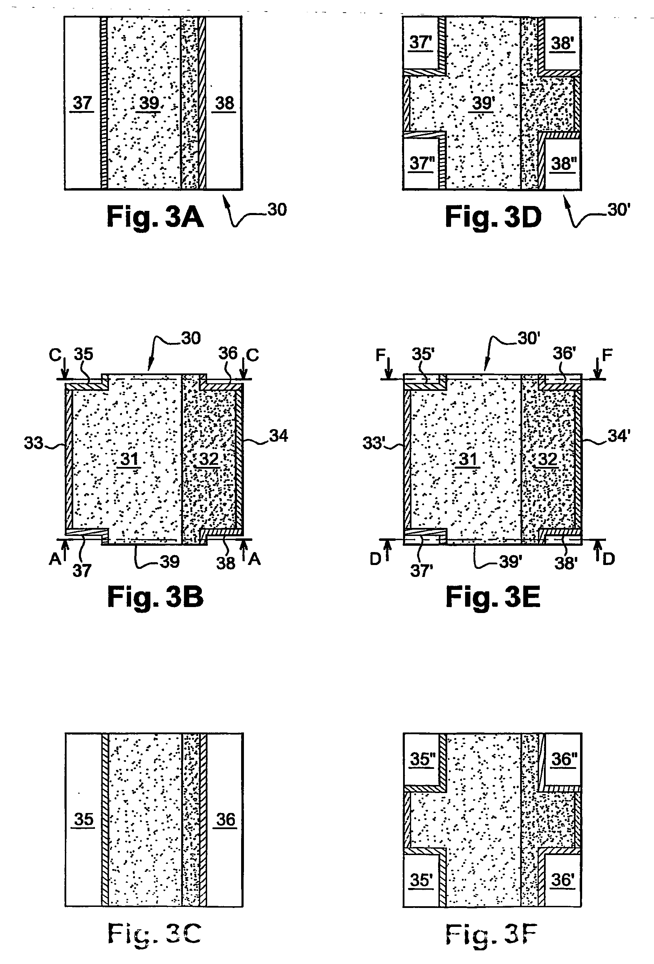

Dans le premier mode de réalisation du composant illustré sur les figures 2, 3A, 3B, 3C, la face inférieure A d'appui du composant 30 comporte deux plages métallisée d'accrochage 37, 38 s'étendant sur les deux portions, dites portions distales, de surface correspondant respectivement au bord d'extrémité antérieure E/A et au bord d'extrémité postérieure A/F. Ces deux bandes métallisées 37 et 38 adjacentes aux bordures opposées de la puce 30 sont séparées par une bande médiane 39 faisant légèrement saillie du composant.

L'ajustement de la quantité de matière fusible 27, 28 permet de faire basculer légèrement le composant 30 d'avant en arrière. Ceci permet d'ajuster l'alignement de l'axe optique OO du composant 30 selon un degré de liberté.

Dans une variante de réalisation illustrée sur les figures 3D à 3F, la face inférieure 39' d'appui du composant 30 comporte quatre plages métallisées 37', 37" , 38', 38" aménagées aux quatre coins de ladite face 39' du composant. Les quatre plages métallisées d'accrochage 37', 37", 38', 38" sont de préférence disposées au creux de quatre cavités aménagées aux quatre parties d'angle de la face de report du composant 30'. Les quatre plages métallisées en retrait sont alors séparées par une surface saillante 39' en forme de croix.

Une telle disposition permet, en modulant l'épaisseur d'alliage fusible entre chaque plage d'accrochage 37', 37" , 38' ou 38" et la plage d'accueil correspondante (non illustrée), d'ajuster l'inclinaison du composant 30' selon deux axes de basculement correspondant aux axes de la croix.

L'avantage d'une telle configuration à quatre plages d'accrochage aux quatre coins de la face du composant est de permettre d'ajuster l'alignement de l'axe optique OO du composant avec deux degrés de liberté.

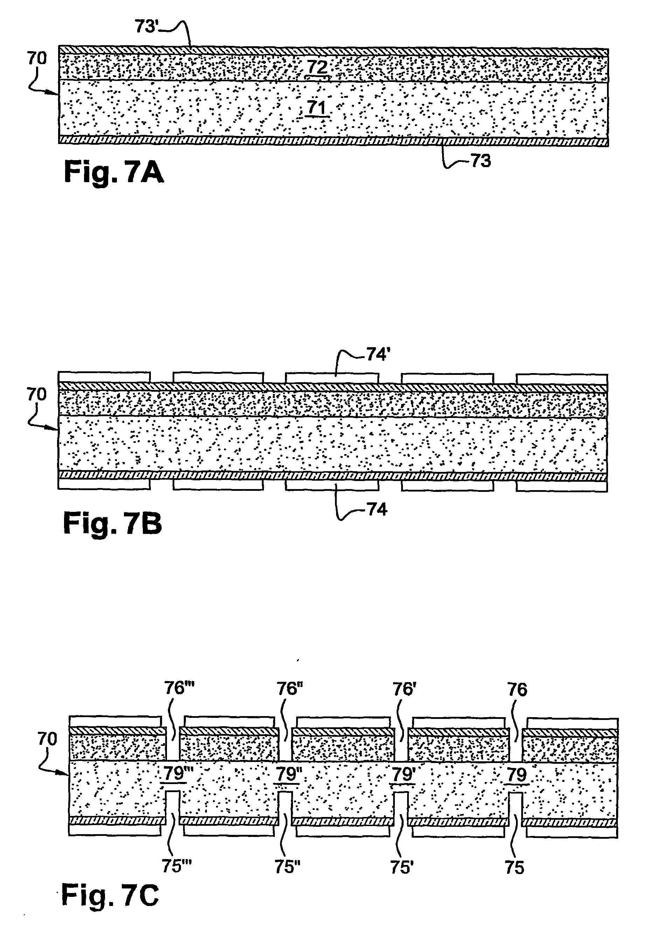

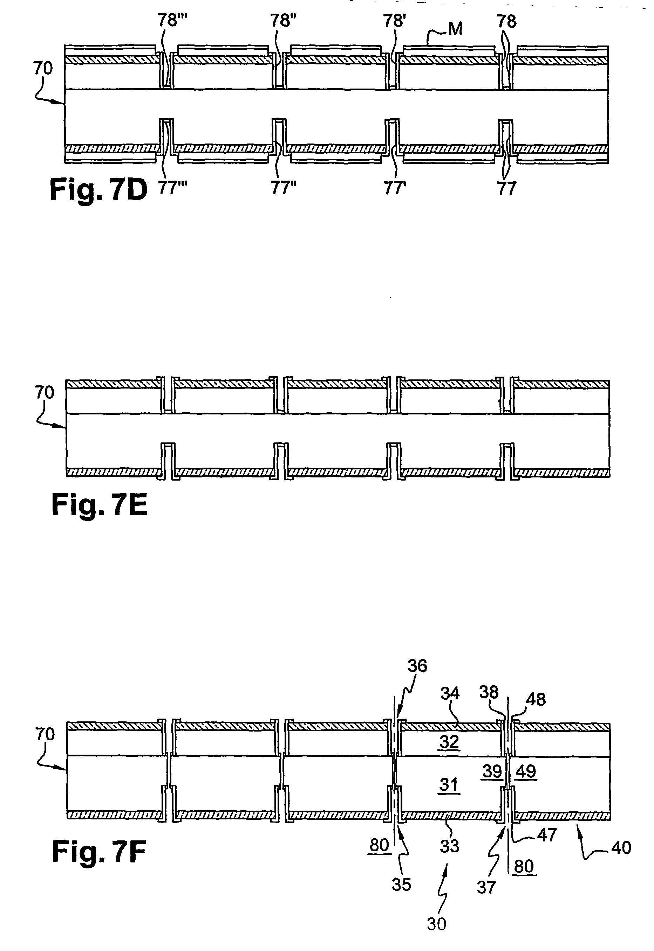

Sur les réalisations des figures 2 et 3, il apparaît que des plages métallisées d'accrochage 37, 38 et 35, 36 sont implantées sur deux faces opposées A et C du composant 30, 30'. Une telle disposition correspond à la découpe des composants optiques à l'issue du procédé de fabrication collective dans une plaquette de substrat illustré figure 7. L'implantation des plages d'accrochage sur les faces opposées A et C du composant 30, 30' permet éventuellement de reporter un autre élément contre la face supérieure C.

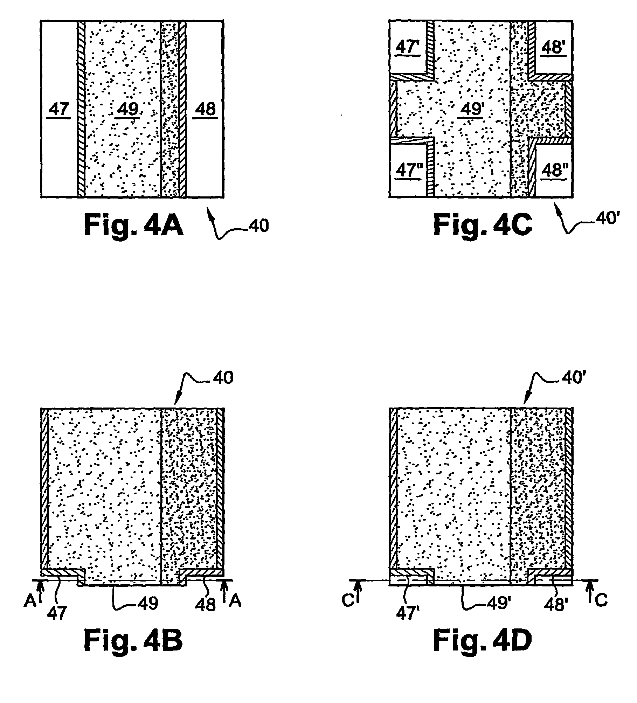

Les figures 4A - 4D illustrent un second mode de réalisation dans lequel une seule face du composant 40, la face inférieure A (face de report), comporte des plages métallisées d'accrochage 47 et 48.

Comme décrit précédemment, le dépôt de métallisation sur la face inférieure A autour d'une saillie 49 peut former deux bandes métallisées 47 et 48 s'étendant le long de deux bords d'extrémité opposés de ladite face A autour d'une saillie 49 selon la vue 4A. Alternativement, la vue 4C montre que quatre plages métallisées 47', 47", 48', 48" peuvent être aménagées sur ladite face de report autour d'une saillie 49' dans le cadre de ce second mode de réalisation.

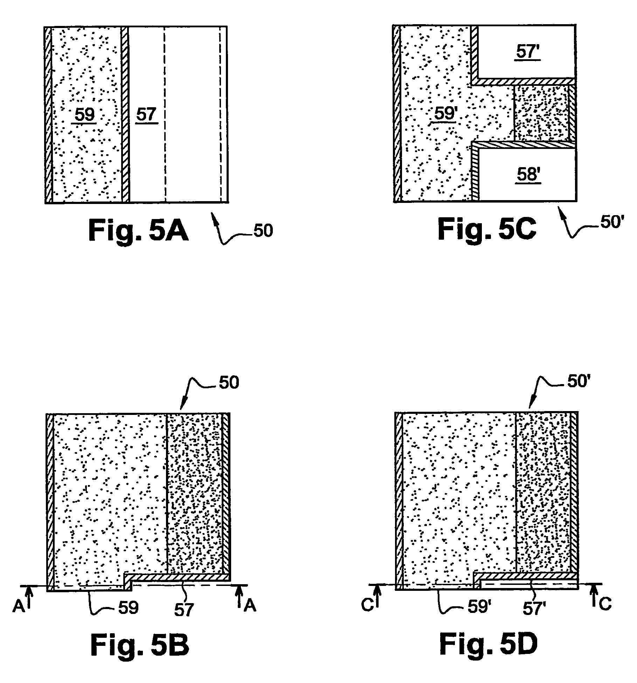

D'après un troisième mode de réalisation, illustré figure 5A et 5B, la face inférieure A de report du composant 50 comporte une unique plage métallisée d'accrochage 57 déposée sur une portion de l'aire de la face A, en retrait de la surface saillante 59 du composant 50.

La vue 5C montre encore que, de façon alternative, la face inférieure A du composant optique 50 peut comporter deux plages métalliques d'accrochage 57', 58' déposées aux creux de deux cavités aménagées à l'intérieur de deux angles voisins de la face 59' du composant optique 50'.

Il apparaît clairement dans la description des modes de réalisation qui précède que le nombre, la disposition et la configuration géométrique des plages de métallisation sur la ou les faces du composant peuvent connaître de multiples adaptations, combinaisons et variantes, sans sortir du cadre de l'invention.

Il est à noter, comme illustré dans les figures 5A, 5B, que la métallisation d'accrochage 57 occupe, de préférence, une grande partie de la face de report, ou plus précisément une majeure partie de l'aire de section de la puce 50. Cette disposition s'applique à tous les modes de réalisation illustrés dans les figures 2 à 6.

La largeur d'une plage d'accueil est typiquement de l'ordre de 50 µm à 450 µm, par exemple pour une puce de 1 mm de large.

L'avantage de métalliser une grande partie de la surface de report est d'augmenter la capacité de transfert thermique entre le composant optique et la plateforme de support. Une telle section de pont thermique permet d'améliorer le refroidissement des composants, notamment des lasers.

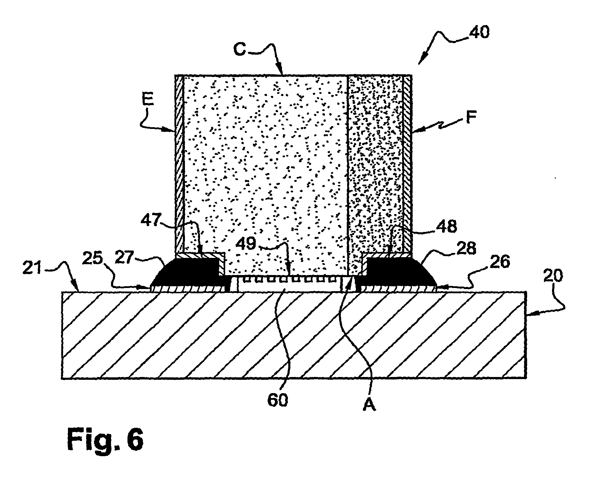

La figure 6 montre une autre disposition pour améliorer l'évacuation de chaleur, selon laquelle un élément intermédiaire 60 est monté entre la surface saillante 49 de la face A de report du composant 40 et la surface 21 de la plateforme 20 de report. L'élément intermédiaire 60 a une fonction de radiateur ou de système de refroidissement, ce qui améliore encore l'évacuation d'énergie calorique du dispositif.

Une autre fonction d'un tel élément intercalaire 60 est de servir de cale de positionnement réglable ou de butée mécanique pour ajuster le positionnement et l'alignement du composant optique 40.

L'invention prévoit que les composants sont obtenus grâce à un procédé de fabrication collectif, simple et avantageux.

La difficulté technique est de réaliser la métallisation à l'échelle du substrat d'une manière collective. En appliquant un procédé spécifique, on obtient une puce de composant optique avec une géométrie particulière.

Les figures 7A-7F illustrent des étapes d'un procédé de fabrication de composants optiques selon l'invention. On dispose d'abord d'une plaquette 70 de substrat (en anglais « wafer ») dans lequel la structure des composants optiques est implantée (figure 7A). Suivant le cadre de l'exemple d'application donné précédemment, le substrat contient deux couches 71, 72 superposées, constituées de matériau laser 71 et de matériau absorbant saturable 72.

Les surfaces inférieures et supérieures de substrat 70 sont par suite revêtues de couches réfléchissantes formant les miroirs 73 et 73'.

L'étape suivante (figure 7B) consiste à déposer une résine photosensible sur la ou les deux surfaces de la plaquette de substrat.

Les couches 74, 74' de résine photosensible (positive ou négative) sont insolées à travers un masque de gravure pour réaliser les motifs souhaités. La résine est ensuite développée.

On peut aussi réaliser une découpe préalable du substrat.

Le masque de gravure (non illustré) présente une série de fentes d'ouvertures parallèles. La longueur et la disposition des fentes varient selon le mode de réalisation souhaité. Pour obtenir des bandes métallisées en creux s'étendant tout au long des arêtes opposées des composants comme dans le mode de réalisation des figures 2, 3, 4A et 5A, il suffit d'une série de fentes parallèles étendues longitudinalement sur toute l'étendue de la plaquette.

Une étape de gravure par attaque chimique, permet de former une série de tranchées ou de sillons 75, 75', 75", 75"', 76..., creusée dans l'épaisseur de la plaquette 70 (figure 7C).

Alternativement, pour obtenir des plages métallisées en creux disposées seulement aux angles des composants comme dans certaines réalisations évoquées ci-dessus, le motif du masque de gravure comporte un réseau de courtes fentes parallèles 75, 75',..., 76"' qui se succèdent transversalement et longitudinalement. De telles fentes peu étendues en longueur, permettent de creuser, par attaque chimique, un réseaux de cavités 75, 75',..., 76"' séparées les unes des autres.

L'attaque chimique est dirigée perpendiculairement à la surface vers le coeur du substrat 70, et l'attaque est interrompue après avoir traversé et creusé une portion suffisante d'épaisseur du substrat tout en conservant une portion 79 restante intacte de substrat.

Si la profondeur totale de creusement des tranchées ou cavités 75,..., 76"' est supérieure à l'épaisseur 79, 79', 79" , 79"' restante intacte de substrat, les plages d'accrochage occupent la majeure partie de la surface finale des composants.

Le creusement des tranchées ou cavités 75,..., 76"' permet avantageusement de prédécouper la plaquette pour former les puces des composants futurs. De façon avantageuse, les portions 79 restantes d'épaisseur de la plaquette forment des ponts de substrat qui maintiennent les futurs composants solidarisés entre eux pendant la fabrication.

L'étape suivante (figure 7D) consiste à déposer une métallisation d'accrochage M sur une face ou sur les deux faces de la plaquette 70, par exemple par pulvérisation cathodique ou par évaporation.

Plusieurs opérations successives de métallisation peuvent être prévues pour former un complexe de plusieurs couches métallisées superposées, par exemple, trois opérations de dépôts successifs de titane, de nickel et d'or pour obtenir une structure à triples couches Ti/Ni/Au.

Comme le montre la figure 7D, grâce au procédé de l'invention, la métallisation 77, 78 se dépose aux creux des tranchées ou cavités 75-76 creusées à travers l'épaisseur du substrat. De façon avantageuse, les couches métallisées recouvrent à la fois le fond 77 "' , 78"' et les flancs 77', 77", 78', 78" des tranchées ou cavités 75, 76.

On obtient ainsi des plages métallisées déposées en retrait dans des encoches ou cavités aménagées à l'emplacement des arêtes ou des angles des composants à venir.

La métallisation est suivie par une étape de suppression de la résine 74 et du métal M en excès déposés sur la résine (figure 7E), par exemple par un procédé dit de « lift-off » qui consiste à dissoudre dans un solvant les couches de résine recouvrant la plaquette. Comme les bords d'attaque des couches de résine 74 et 74' forment des surplombs entre la surface de la résine 74 et le creux des cavités 75-76, il existe une discontinuité entre la métallisation à la surface de la résine et la métallisation au creux des tranches ou cavités. Par conséquent, la suppression de la couche de résine détache la couche de métal M en excès.

Pour achever le processus de fabrication, on prolonge les préliminaires de découpage résultant du creusement des tranchées 75, 75' , ..., 76"' par une opération de découpage complémentaire dans l'axe desdites tranchées. Cette étape de découpage final (figure 7F) est de préférence effectuée avec un outillage fin, permettant de tracer un étroit trait de coupe 80 suivant l'axe des tranchées 75-76, 75'-76', 75"-76" et 75"'-76"'.

On obtient ainsi des puces de composants optiques découpées et prêtes à être assemblées.

Si le trait de coupe 80 est plus étroit que la largeur des tranchées ou cavités 77, 78, on obtient une surface de découpe comportant une surface saillante 39 ou 49 correspondant à la surface d'appui 39, 49, 59 du composant 30, 40, ou 50 illustré sur les figures 2 à 5.

Les plages métallisées d'accrochage 35, 36, 37, 38 ou 47, 48 apparaissent alors en retrait au creux des encoches restant creusées par rapport à la surface saillante 39, 49 des composants.

Comme le suggère la figure 7F, un tel procédé permet d'obtenir au choix des composants 30 comportant des plages métallisées 35, 36, 37, 38 sur les deux faces opposées A et C (correspondant aux modes de réalisation des figure 2 et 3) ou des composants 40 comportant une ou des plages métallisées 47, 48 sur une seule face A (modes de réalisation des figures 4 à 6). Pour obtenir des composants 40 avec une métallisation sur une seule face, il convient de prévoir une opération de découpe médiane supplémentaire (non illustrée).

Le procédé de fabrication selon l'invention offre l'avantage d'être particulièrement simple et de comporter un nombre d'étapes réduit. Le procédé offre en particulier l'avantage de combiner le creusement des cavités et du dépôt de métallisation en utilisant un seul masque de gravure, ce qui permet de faire correspondre exactement les plages de métallisation avec les zones d'encoches creusées en retrait. En outre, les plages métallisées d'accrochage et/ou de soudure sont réalisées collectivement.

Dans la description qui précède, la mise en oeuvre de l'invention a été appliquée - à titre d'exemple uniquement - à la réalisation de composants optiques ayant une fonction de cavités lasers encore appelés « microlasers ». Les applications de la technologie des microlasers s'étendent à des domaines très variés tels que le biomédical, l'industrie des semi-conducteurs, l'environnement, l'instrumentation, la métrologie et la télémétrie. Les composants microlasers peuvent être intégrés dans des systèmes beaucoup plus complexes.

Plus généralement, l'invention s'applique avantageusement à la réalisation de composants optiques multicouches, les plages métallisées étant alors déposées sur une ou des faces latérales perpendiculaires au plan des couches, c'est-à-dire au plan d'interface (dioptre) séparant les milieux optiques.

De façon avantageuse, cette disposition de l'invention permet de déposer les plages métallisées d'accrochage de soudure sur des faces latérales A, B, C ou D perpendiculaires aux faces antérieure et postérieure E et F qui constituent généralement les faces actives d'entrée et de sortie des faisceaux optiques. L'assemblage du composant sur une surface perpendiculaire au plan de croissance du composant est ainsi réalisable facilement.

L'invention peut s'étendre à toutes les applications qui nécessitent un montage sur une face perpendiculaire à la face active : réseaux de composants optiques, réseaux de détecteurs, réseaux de capteurs etc..

De façon générale, l'invention peut être mise en oeuvre pour la réalisation et l'assemblage de tout type de composant optique.

Le vocable « composant optique » utilisé dans la présente description désigne et englobe à la fois les composants du domaine optique pur, les composants optoélectroniques et les composants d'optronique, et de façon générale, les composants qui ne font pas partie de l'optique au sens strict mais qui interagissent avec la lumière, tels que les émetteurs, capteurs, détecteurs, systèmes fluidiques....

## Revendications

1. Composant (30, 40, 50) destiné à être monté sur une surface (20, 21) de report, et comportant au moins une couche définissant un plan dans lequel au moins une face de report (A, C) du composant, non parallèle audit plan, comporte au moins une plage (35, 36, 37, 38, 47, 48, 57) métallisée d'accrochage permettant un assemblage par report du composant et soudure (27, 28) des plages métallisées d'accrochage sur la surface de report, **caractérisé en ce que** au moins une plage métallisée d'accrochage dudit composant est disposée dans une encoche (37, 38, 47, 48, 57) creusée en retrait par rapport à la surface (39, 49, 59) de la face (A) de report.

2. Composant selon la revendication 1, comportant au moins une couche active.

3. Composant selon la revendication 2, la couche active étant une couche optiquement active.

4. Composant selon l'une des revendications précédentes, **caractérisé en ce qu'**il est associé d'autre part à une plateforme (20) de support formant surface (21) de report et comportant des plages (25, 26) métallisées d'accueil correspondant aux plages (37, 38) métallisées d'accrochage du composant.

5. Composant selon l'une des revendications précédentes, **caractérisé en ce que** la ou lesdites plages métallisées d'accrochage sont aménagées en bordure de la face (A) de report du composant.

6. Composant selon l'une des revendications précédentes, **caractérisé en ce que** la face (39, 49) de report comporte au moins deux plages (37, 38, 47, 48) métallisées aménagées le long de deux bords opposés de ladite face.

7. Composant selon l'une des revendications 1 à 6, **caractérisé en ce que** la face (39', 49') de report comporte quatre plages (37', 37", 38', 38", 47', 47", 48', 48") métallisées aménagées aux angles de ladite face (A).

8. Composant selon l'une des revendications précédentes, **caractérisé en ce que** plusieurs faces (A, C) du composant formant faces de report comportent des plages métallisées d'accrochage.

9. Composant selon l'une des revendications précédentes, **caractérisé en ce que** la ou les plages (37, 38, 35, 36, 47, 48, 57) métallisées d'accrochage aménagées sur chaque face (A, C) de report représentent une majeure partie de l'aire de ladite face (A).

10. Composant selon l'une des revendications précédentes, **caractérisé en ce qu'**un élément (60) intermédiaire est disposé entre la face (A) de report du composant (40) et la surface (21) de report.

11. Composant selon la revendication 10, **caractérisé en ce que** l'élément (60) intermédiaire est disposé entre le composant (40) et la surface (21) de report avec une fonction de cale ou de butée de réglage de positionnement.

12. Composant selon la revendication 10, **caractérisé en ce que** l'élément (60) intermédiaire est un radiateur ou un refroidisseur.

13. Composant selon l'une des revendications précédentes, **caractérisé en ce qu'**il comprend plusieurs couches (31, 32) de milieux distincts, lesquelles couches sont disposées parallèlement audit plan.

14. Composant selon l'une des revendications précédentes, **caractérisé en ce qu'**il forme une cellule (30) optique résonante pour une lumière cohérente, deux faces (E, F) latérales opposées parallèles audit plan comportant des couches (33, 34) réfléchissantes.

15. Procédé d'assemblage d'un dispositif dans lequel au moins un composant (30, 40, 50) comportant au moins une couche définissant un plan est reporté sur une surface (21) de report, comportant des opérations consistant à :
- déposer une métallisation (77, 78) sur au moins une face (A, C) du composant, non parallèle audit plan, dite face de report, pour former une ou des plages (35, 36, 37, 38, 47, 48, 57) métallisées d'accrochage, puis,
- reporter le composant sur la surface de report et,
- effectuer une soudure (27, 28), entre chaque plage (37, 38) métallisée d'accrochage du composant reporté et la surface (21) de report ;
**caractérisé par** les étapes suivantes, préliminaires à la réalisation des plages métallisées :
- aménager dans la face (A) de report du composant (30, 40, 50) au moins une encoche (37, 38, 47, 48, 57) creusée en retrait par rapport à la surface (39, 49, 59) de report du composant, et
- effectuer le dépôt de métallisation dans des encoches pour former des plages métallisées en retrait par rapport à la surface de report du composant.

16. Procédé d'assemblage selon la revendication précédente, comportant des opérations complémentaires consistant à :
- disposer d'une plateforme (20) support comprenant ladite surface de report pour le composant, et,
- effectuer un dépôt de métallisation (25, 26) à la surface (21) de la plateforme.

17. Procédé d'assemblage selon la revendication précédente, dans lequel l'opération de métallisation consiste à métalliser une ou des plages (25, 26) d'accueil réparties à la surface (21) de la plateforme, l'emplacement de la ou des plages (25, 26) métallisées d'accueil correspondant aux emplacements de report des plages (37, 38) métallisées d'accrochage du ou des composants (30) à reporter.

18. Procédé d'assemblage selon la revendication 16, dans lequel l'opération de métallisation consiste à métalliser une seule ou plusieurs zones d'accueil à la surface de la plateforme, chaque zone métallisée d'accueil correspondant et englobant l'emplacement de report de plusieurs plages métallisées d'accrochage du ou des composants à reporter.

19. Procédé selon l'une des revendications 15 à 18, dans lequel il est prévu de :
- creuser au moins deux encoches (37, 38, 47, 48) d'assemblage par face (A, C) latérale de composant (30, 40) à reporter, et par la suite de,
- former au moins deux plages (37, 38, 47, 48) d'accueil métallisées par face latérale de composant à reporter, de façon à,
- ajuster activement l'alignement axial angulaire du composant (30) par rapport à un axe (00) selon 2 degrés de liberté.

20. Procédé selon l'une des revendications 15 à 19, dans lequel il est prévu de :
- creuser quatre encoches (37', 37", 38', 38") d'assemblage par face (A, C) de composant (30') à reporter, et par la suite de,
- former quatre plages (37', 37", 38', 38") d'accueil métallisées aux creux des quatre encoches de chaque face de composant à reporter, de façon à,
- ajuster activement l'alignement axial angulaire du composant reporté par rapport à un axe (OO) selon trois degrés de liberté.

21. Procédé dé fabrication de composants selon l'une des revendications 1 à 14, **caractérisé en ce qu'**il comporte des étapes consistant à :
- disposer d'une plaquette (70) de substrat comprenant l'ébauche du ou des composants (30, 40),
- graver ou découper une série de fentes (75, 76) parallèles dans la plaquette, les fentes étant creusées dans une portion de l'épaisseur du substrat, et,
- déposer une métallisation (77, 78) au creux des fentes préalablement gravées dans l'épaisseur de la plaquette.

22. Procédé de fabrication selon la revendication précédente, dans lequel l'étape de gravure comporte des opérations consistant à :
- déposer au moins une couche (74, 74') de résine photosensible couvrant au moins une face de la plaquette (70) de substrat,
- insoler la ou lesdites couches de résine à travers un masque de gravure présentant une série de fentes d'ouvertures parallèles, et,
- effectuer une attaque (75, 76) chimique à travers la résine insolée, l'attaque se prolongeant vers le coeur du substrat et s'arrêtant sur une portion de l'épaisseur (79) de la plaquette, pour éviter de disjoindre la plaquette (70).

23. Procédé de fabrication selon la revendication 21 ou 22, dans lequel la série de fentes parallèles comporte des fentes (75, 76) étendues longitudinalement afin de tracer des tranchées ou sillons dans la surface de la plaquette.

24. Procédé de fabrication selon la revendication 21 ou 22, dans lequel la série de fentes parallèles comporte au moins deux bandes parallèles de courtes fentes transversales afin de creuser un réseau de cavités (36', 36", 38', 38", 48', 48", 57', 58') dans la surface de la plaquette.

25. Procédé selon l'une des revendications 21 à 24, dans lequel l'étape de métallisation comprend plusieurs opérations de dépôt de couches successives de métaux distincts.

26. Procédé selon la revendication précédente, dans lequel la métallisation comporte trois opérations de dépôt successif de titane, de nickel et d'or pour obtenir une triple couche Ti/Ni/Au.

27. Procédé selon l'une des revendications 21 à 26, dans lequel la métallisation est obtenue par pulvérisation cathodique par évaporation ou par dépôt chimique en phase vapeur.

28. Procédé selon l'une des revendications 21 à 27, comprenant une étape complémentaire consistant à :
- achever la découpe par gravure des composants en effectuant une autre attaque chimique ou une découpe mécanique dirigée dans le prolongement de l'axe des fentes, avec un trait de coupe (80) plus étroit que l'épaisseur d'écartement desdites fentes (75, 76).

## Claims

1. Component (30, 40, 50) to be mounted on a transfer surface (20, 21), and comprising at least one layer defining a plane in which at least one transfer face (A, C) of the component, not parallel to said plane, comprises at least one metallised bonding land (35, 36, 37, 38, 47, 48, 57) enabling assembly of the component by transfer and soldering (27, 28) of the metallised bonding lands onto the transfer surface, **characterised in that** at least one metallised bonding land of said component is arranged in a recessed notch (37, 38, 47, 48, 57) setback from the surface (39, 49, 59) of the transfer face (A).

2. Component according to claim 1, comprising at least one active layer.

3. Component according to claim 2, the active layer being an optically active layer.

4. Component according to one of the above claims, **characterised in that** it is further associated with a support platform (20) forming a transfer surface (21) and comprising metallised mounting lands (25, 26) corresponding to the metallised bonding lands (37, 38) of the component.

5. Component according to one of the above claims, **characterised in that** said metallised bonding land(s) is (are) arranged at the border of the transfer face (A) of the component.

6. Component according to one of the above claims, **characterised in that** the transfer face (39, 49) comprises at least two metallised lands (37, 38, 47, 48) arranged along two opposite edges of said face.

7. Component according to one of claims 1 to 6, **characterised in that** the transfer face (39', 49') comprises four metallised lands (37', 37", 38', 38", 47', 47", 48', 48") arranged at the corners of said face (A).

8. Component according to one of the above claims, **characterised in that** several faces (A, C) of the component forming the transfer faces comprise metallised bonding lands.

9. Component according to one of the above claims, **characterised in that** the metallised bonding land(s) (37, 38, 35, 36, 47, 48, 57) arranged on each transfer face (A, C) represent a major part of the surface area of said face (A).

10. Component according to one of the above claims, **characterised in that** an intermediate element (60) is placed between the transfer face (A) of the component (40) and the transfer surface (21).

11. Component according to claim 10, **characterised in that** the intermediate element (60) is placed between the component (40) and the transfer surface (21) with a shim or positioning adjustment stop function.

12. Component according to claim 10, **characterised in that** the intermediate element (60) is a heat sink or a cooler.

13. Component according to one of the above claims, **characterised in that** it comprises several layers (31, 32) of distinct media which are arranged parallel to said plane.

14. Component according to one of the above claims, **characterised in that** it forms an optical resonant cell (30) for coherent light, two opposite side faces (E, F) parallel to said plane comprising reflecting layers (33, 34).

15. Method of assembly of a device in which at least one component (30, 40, 50) comprising at least one layer defining a plane is transferred onto a transfer surface (21), including operations consisting of:
- depositing a metallisation (77, 78) on at least one face (A, C) of the component, not parallel to said plane and called the transfer face, so as to form one or more metallised bonding lands (35, 36, 37, 38, 47, 48, 57), then,
- transferring the component onto the transfer surface and,
- making a solder (27, 28), between each metallised bonding land (37, 38) of the transferred component and the transfer surface (21);
**characterised by** the following steps, prior to forming the metallised lands:
- providing at least one notch (37, 38, 47, 48, 57) excavated and set back from the transfer surface (39, 49, 59) of the component in the transfer face (A) of the component (30, 40, 50), and
- depositing metallisation in notches so as to form metallised lands set back from the transfer surface of the component.

16. Method of assembly according to the above claim, including further operations consisting of:
- providing a support platform (20) comprising said transfer surface for the component, and,
- making a metallisation deposit (25, 26) on the surface (21) of the platform.

17. Method of assembly according to the above claim, in which the metallisation operation consists of metallising one or more mounting lands (25, 26) distributed around the surface (21) of the platform, the location of the metallised mounting land(s) (25, 26) corresponding to the transfer locations of the metallised bonding lands (37, 38) of the component(s) (30) to be transferred.

18. Method of assembly according to claim 16, in which the metallisation operation consists of metallising one or more mounting lands on the surface of the platform, each metallised mounting land corresponding and surrounding the transfer position of several metallised bonding lands of the component(s) to be transferred.

19. Method according to one of claims 15 to 18, in which it is planned to:
- excavate at least two assembly notches (37, 38, 47, 48) for each side face (A, C) of the component (30, 40) to be transferred, and then to,
- form at least two metallised mounting lands (37, 38, 47, 48) for each side face of a component to be transferred, so as to,
- actively adjust the angular axial alignment of the component (30) with respect to an axis (00) with 2 degrees of freedom.

20. Method according to one of claims 15 to 19, in which the following are planned:
- excavate four assembly notches (37', 37", 38', 38") for each face (A, C) of the component (30') to be transferred, and then,
- form four metallised mounting lands (37', 37", 38', 38") at the bottoms of the four notches of each face of the component to be transferred, so as to,
- actively adjust the angular axial alignment of the transferred component with respect to an axis (OO) with three degrees of freedom.

21. Process for manufacturing components according to one of claims 1 to 14, **characterised in that** it includes steps consisting of:
- providing a substrate wafer (70) comprising the blank of the component(s) (30, 40),
- etching or cutting a series of parallel slits (75, 76) in the wafer, the slits being excavated from a portion of thickness of the substrate, and,
- depositing a metallisation (77, 78) at the bottom of the slits previously etched in the thickness of the wafer.

22. Manufacturing process according to the above claim, in which the etching step includes operations consisting of:
- depositing at least one layer (74, 74') of photoresist covering at least one face of the substrate wafer (70),
- insolating said photoresist layer(s) through an etching mask with a series of parallel opening slits, and,
- performing etching (75, 76) through the insolated photoresist, etching extending towards the core of the substrate and stopping on one portion of the thickness (79) of the wafer, to prevent separating the wafer (70).

23. Manufacturing process according to either claim 21 or 22, in which the series of parallel slits (75, 76) includes slits that extend longitudinally so as to form trenches or grooves in the surface of the wafer.

24. Manufacturing process according to either claim 21 or 22, in which the series of parallel slits includes at least two parallel strips of short transverse slits so as to excavate a network of cavities (36', 36", 38', 38", 48', 48", 57', 58') in the surface of the wafer.

25. Process according to one of claims 21 to 24, in which the metallisation step includes several operations to deposit successive layers of distinct metals.

26. Process according to the above claim, in which metallisation includes three operations for successive deposition of titanium, nickel and gold to obtain a Ti/Ni/Au triple layer.

27. Process according to one of claims 21 to 26, in which metallisation is obtained by cathodic sputtering by evaporation or by chemical vapour phase deposition.

28. Process according to one of claims 21 to 27, including an additional step consisting of:
- finishing cutting by etching of the components by performing another etching operation or mechanical cutting directed along the extension of the axis of the slits, in which the cut line (80) is narrower than the separation thickness of said slits (75, 76).

## Patentansprüche

1. Komponente (30, 40, 50), dazu bestimmt, auf eine Transferoberfläche (20, 21) montiert zu werden und mindestens eine Schicht umfassend, die eine Ebene definiert, in der wenigstens eine zu der genannten Ebene nicht parallele Transferfläche (A, C) der Komponente mindestens einen metallisierten Befestigungsbereich (35, 36, 37, 38, 47, 48, 57) umfasst, der eine Montage durch Transferieren der Komponente und Anlöten (27, 28) der metallisierten Befestigungsbereiche auf der Transferoberfläche ermöglicht,
**dadurch gekennzeichnet, dass** wenigstens ein metallisierter Befestigungsbereich der genannten Komponente in einer in Bezug auf die Oberfläche (39, 49, 59) rückspringenden Kerbung (37, 38, 47, 48, 57) der Transferfläche (A) vorgesehen ist.

2. Komponente nach Anspruch 1 mit wenigstens einer aktiven Schicht.

3. Komponente nach Anspruch 2, wobei die aktive Schicht eine optisch aktive Schicht ist.

4. Komponente nach einem der vorangehenden Ansprüche, **dadurch gekennzeichnet, dass** sie außerdem mit einer Trägerplattform (20) verbunden ist, welche die Transferoberfläche (21) aufweist und metallisierte Empfangsbereiche (25, 26) umfasst, die den metallisierten Befestigungsbereichen (37, 38) der Komponente entsprechen.

5. Komponente nach einem der vorangehenden Ansprüche, **dadurch gekennzeichnet, dass** der oder die genannten metallisierten Befestigungsbereiche am Rande der Transferfläche (A) der Komponente vorgesehen sind.

6. Komponente nach einem der vorangehenden Ansprüche, **dadurch gekennzeichnet, dass** die Transferfläche (39, 49) wenigstens zwei metallisierte Bereiche (37, 38, 47, 48) umfasst, vorgesehen längs von zwei entgegengesetzten Rändern der genannten Fläche.

7. Komponente nach einem der Ansprüche 1 bis 6, **dadurch gekennzeichnet, dass** die Transferfläche (39', 49') vier an den Ecken der genannten Fläche (A) vorgesehene metallisierte Bereiche (37', 37", 38°, 38", 47', 47", 48', 48") umfasst.

8. Komponente nach einem der vorangehenden Ansprüche, **dadurch gekennzeichnet, dass** mehrere transferflächenbildende Flächen (A, C) der Komponente metallisierte Befestigungsbereiche umfassen.

9. Komponente nach einem der vorangehenden Ansprüche, **dadurch gekennzeichnet, dass** der oder die auf jeder Transferfläche (A, C) vorgesehenen metallisierten Befestigungsbereiche (37, 38, 35, 36, 47, 48, 57) einen Großteil des Flächeninhalts der genannten Fläche (A) darstellen.

10. Komponente nach einem der vorangehenden Ansprüche, **dadurch gekennzeichnet, dass** zwischen der Transferfläche (A) der Komponente (40) und der Transferfläche (21) ein Zwischenelement (60) angeordnet ist.

11. Komponente nach Anspruch 10, **dadurch gekennzeichnet, dass** das Zwischenelement (60) zwischen der Komponente (40) und der Transferfläche (21) angeordnet ist und als Positionierungsunterlage oder -anschlag dient.

12. Komponente nach Anspruch 10, **dadurch gekennzeichnet, dass** das Zwischenelement (60) ein Heiz- oder ein Kühlelement ist.

13. Komponente nach einem der vorangehenden Ansprüche, **dadurch gekennzeichnet, dass** sie mehrere Schichten (31, 32) aus unterschiedlichen Medien bzw. Materialien umfasst, wobei diese Schichten parallel zu der genannten Ebene angeordnet sind.

14. Komponente nach einem der vorangehenden Ansprüche, **dadurch gekennzeichnet, dass** sie eine optische Resonanzzelle (30) für ein kohärentes Licht bildet, wobei zwei entgegengesetzte, zu der genannten Ebene parallele Flächen (E, F) reflektierende Schichten (33, 34) umfassen.

15. Montageverfahren einer Vorrichtung, bei dem mindestens eine Komponente (30, 40, 50) mit mindestens einer eine Ebene definierenden Schicht auf eine Transferfläche (21) transferiert wird, das folgende Operationen umfasst:
- Abscheidung einer Metallisierung (77, 78) auf wenigstens einer zu der genannten Ebene nicht parallelen Fläche (A, C), Transferfläche genannt, um einen metallisierten Befestigungsbereich oder metallisierte Befestigungsbereiche auszubilden, sodann
- Transfer der Komponente auf die Transferfläche, und
- Ausführung der Lötung (27, 28) zwischen jedem metallisierten Befestigungsbereich (37, 38) der transferierten Komponente und der Transferoberfläche (21);
**gekennzeichnet durch** die folgenden, der Realisierung der metallisierten Bereiche vorausgehenden Schritte:
- Realisierung von wenigstens einer in Bezug auf die Transfaroberfläche (39, 49, 59) rückspringenden Kerbung (37, 38, 47, 48, 57) in der Transferfläche (A) der Komponente (30, 40, 50), und
- Ausführung der Metallisierungsabscheidung in den Kerbungen, um in Bezug auf die Transferoberfläche der Komponente rückspringende metallisierte Bereiche auszubilden.

16. Montageverfahren nach dem vorangehenden Anspruch, mit folgenden zusätzlichen Operationen:
- Anordnung einer Trägerplattform (20), die die genannte Transferoberfläche für die Komponente umfasst, und
- Ausführung einer Metallisierungsabscheidung (25, 26) auf der Oberfläche (21) der Plattform.

17. Montageverfahren nach dem vorangehenden Anspruch, bei dem die Metallisierungsoperation darin besteht, einen Empfangsbereich oder Empfangsbereiche (25, 26), verteilt auf der Oberfläche (21) der Plattform, zu metallisieren, wobei der Platz des Empfangsberclchs bzw. der Empfangsbereiche den Transferplätzen der metallisierten Befestigungsbereiche (37, 38) der zu transferierenden Komponente oder Komponenten (30) entspricht.

18. Montageverfahren nach Anspruch 16, bei dem die Metallisierungsoperation darin besteht, eine einzige oder mehrere Empfangszonen an der Oberfläche der Plattform zu metallisieren, wobei jede metallisierte Empfangszone dem Transferplatz von mehreren metallisierten Befestigungsbereichen der zu transferierenden Komponente oder Komponenten entspricht und umfasst.

19. Verfahren nach einem der Ansprüche 15 bis 18, mit folgenden Schritten:
- Realisierung von wenigstens zwei Kerbungen (37, 38, 47, 48) zur Seitenflächenmontage (A, C) einer zu transferierenden Komponente (30, 40), sodann
- Realisierung von wenigstens zwei metallisierten Seitenflächenempfangsbereichen (37, 38, 47, 48) einer zu transferierenden Komponente, für eine
- aktive Anpassung der axialen Winkelausrichtung der Komponente (30) in Bezug auf eine Achse (00) entsprechend zwei Freiheitsgraden.

20. Verfahren nach einem der Ansprüche 15 bis 19, mit folgenden Schritten:
- Realisierung von vier Kerbungen (37', 37", 38', 38") zur Seitenflächenmontage (A, C) einer zu transferierenden Komponente (30'), sodann
- Realisierung von vier metallisierten Seitenflächenempfangsbereichen (37', 37", 38', 38") in den Aussparungen der vier Kerbungen von jeder Fläche bzw. Seite einer zu transferierenden Komponente, für eine
- aktive Anpassung der axialen Winkelausrichtung der transferierten Komponente in Bezug auf eine Achse (00) entsprechend drei Freiheitsgraden.

21. Herstellungsverfahren von Komponenten nach einem der Ansprüche 1 bis 14, **dadurch gekennzeichnet, dass** es die folgenden Schritte umfasst:
- Anordnen einer das Vorprodukt der Komponente oder Komponenten (30, 40) umfassenden Substratplatte (70),
- Ätzen oder Schneiden einer Serie paralleler Schlitze (75, 76) in der Platte, wobei die Schlitze in einen Teil der Dicke des Substrats eindringen, und
- Abscheiden einer Metallisierung (77, 78) in den Hohlräumen der vorher in die Dicke der Platte geätzten Schlitze.

22. Herstellungsverfahren nach dem vorangehenden Anspruch, bei dem der Ätzschritt die folgenden Operationen umfasst:
- Abscheidung von mindestens einer Fotoresistschicht (74, 74'), die wenigstens eine Fläche bzw. Seite der Substratplatte (70) bedeckt,
- Bestrahlung der Resistschicht oder Resistschichten durch eine Ätzmaske hindurch, die eine Serie paralleler Schlitze aufweist, und
- Ausführung einer chemischen Ätzung (75, 76) durch das bestrahlte Resist hindurch, wobei die Ätzung nur über einen Teil der Plattandicke (79) in Richtung Kern des Substrats erfolgt und dann gestoppt wird, um eine Durchtrennung der Platte (70) zu vermeiden.

23. Herstellungsverfahren nach einem der Ansprüche 21 oder 22, bei dem die Serie paralleler Schlitze Schlitze (75, 76) umfasst, die sich longitudinal erstrecken bzw. ausbreiten, um in der Oberfläche der Platte Gräben oder Furchen zu realisieren.

24. Herstellungsverfahren nach einem der Ansprüche 21 oder 22, bei dem die Serie paralleler Schlitze wenigstens zwei parallele Streifen kurzer transversaler Schlitze umfasst, um in der Oberfläche der Platte ein Gitter aus Hohlräumen (36', 36", 38', 38", 48', 48", 57', 58') zu realisieren.

25. Verfahren nach einem der Ansprüche 21 bis 24, bei dem der Metallisierungsschritt mehrere Operationen zur Abscheidung sukzessiver Schichten aus unterschiedlichen Materialien umfasst.

26. Verfahren nach dem vorangehenden Anspruch, bei dem die Metallisierung drei aufeinanderfolgende Schritte zur Abscheidung von Titan, von Nickel und von Gold umfasst, um eine Ti/Ni/Au-Tripolschicht herzustellen.

27. Verfahren nach einem der Ansprüche 21 bis 26, bei dem die Metallisierung durch Kathodenzerstäubung, durch Verdampfung oder durch Gasphasenabscheidung erfolgt.

28. Verfahren nach einem der Ansprüche 21 bis 27, mit einem zusätzlichen Schritt, darin bestehend:
- dass man den Ätz-Zuschnitt der Komponenten vollendet, indem man in Richtung Verlängerung der Achse der Schlitze einen weiteren chemischen Angriff oder ein mechanisches Schneiden mit einer Schnittlinie (80) durchführt, die schmaler ist als die Dicke bzw. Breite der genannten Schlitze (75, 76).
